# EUROPEAN PATENT SPECIFICATION

(11) **EP 0 986 878 B1**
(45) Date of publication and mention of the grant of the patent: **22.09.2004**
(21) Application number: 98924347.2
(22) Date of filing: 02.06.1998
(51) Int. Cl.: H04L 12/50

(54) **METHOD FOR THE SWITCHING OF DATA TRAFFIC IN A DATA COMMUNICATION SYSTEM**
VERFAHREN ZUM VERMITTELN VON DATENVERKEHR IN EINEM DATENÜBERTRAGUNGSSYSTEM
PROCEDE DE COMMUTATION DU TRAFIC DE DONNEES DANS UN SYSTEME DE TRANSMISSION DE DONNEES

(30) Priority: 02.06.1997 FI 972343; 27.06.1997 FI 972798
(43) Date of publication of application: 22.03.2000
(73) Proprietor: Nokia Corporation, 02150 Espoo (FI)
(72) Inventor: HYNYNEN, Paavo, FIN-00550 Helsinki (FI); MUSIOL, Torsten, D-40468 Düsseldorf (DE)
(74) Representative: Simmelvuo, Markku Kalevi
(86) International application number: PCT/FI1998/000478
(87) International publication number: WO 1998/056143

(56) References cited:
- EP-A2- 0 731 618
- EP-A2- 0 734 186
- WO-A1-97/35404
- WO-A2-97/50230

## Description

The present invention relates to a method as defined in the preamble of claim 1 for the switching of data traffic in a data communication system. Moreover, the invention relates to a system as defined in the preamble of claim 9 for the switching of data traffic.

In prior art, there are at least two methods for connecting a subscriber to a local exchange, by connecting the subscriber via a subscriber cable directly to the local exchange or to a subscriber module connected to it, or by connecting the subscriber to the local exchange via an access network.

Open interfaces (V5.1 and V5.2) between an access network, preferably an access node, and a local exchange are defined in the ETSI (European Telecommunications and Standards Institute) standards of the ETS 300 324 and ETS 300 347 series. A V5 interface enables subscribers belonging to a physically separate access network to be connected to a telephone exchange using a standard interface. The V5.2 interface between an access node and a telephone exchange is a concentrated traffic interface. The allocation and/or connection of the transmission path is performed in accordance with the standard by using the BCC protocol. In practice, this works so that the part of the BCC protocol in the local exchange scans and specifies a free time slot in the V5 interface and then transmits an allocation message to the protocol component in the access node. The protocol component in the access node acknowledges receipt of the message.

Connections to narrow-band data networks, especially the Internet, are mainly effected via a telephone network using switched ISDN or PSTN connections (Integrated Services Digital Network; Public Switched Telephone Network). The structure of access networks has been developed by teleoperators on the basis of the so-called zig-zag topology. The capacity of access networks has been designed on the basis of an estimated average telephone usage (average call duration, allowed rejection).

Documents WO 97/50230, EP-A-0 734 186, EP-A-0 731 618 disclose switching of data Traffic including integrated Internet Access Server as well as V5.2 Interfaces.

The switching of data traffic via the telephone network presents new challenges regarding the use of capacity. When a connection to the Internet is set up via the telephone network using a switched ISDN connection, the duration of the connection and the amount of data transmitted over it differ significantly from a normal voice connection. For this reason, collisions may occur and bottlenecks may be formed in remote concentrator units and local exchanges, hampering the switching of voice and data traffic. A component particularly susceptible to become a bottleneck is the concentrated V5.2 interface between the access node and the local exchange, because its capacity has been defined on the basis of normal telephone traffic.

Normally, a call to the Internet, set up via a switched ISDN or PSTN link, is first connected to the telephone exchange and further from the telephone exchange to a so-called remote access server (RAS) located in a service supplier's station. The remote access server terminates the ISDN/POTS call setup and takes care of checking the rights relating to call setup and carrying out other corresponding operations before connecting the call to the Internet. If many subscribers connected to the access node set up a connection to the remote access server, a likely result is a situation where the V5.2 interface is overloaded. In this case, calls from other subscribers connected to the access node will fail to be set up.

The object of the present invention is to eliminate the problems described above.

A specific object of the present invention is to produce a new type of method and system in which data connections from subscribers connected to an access node can be set up without congesting the normal telephone network and telephone service.

A further object of the invention is to produce a simple arrangement for improving the capacity of a telephone network by making use of existing standardised technology, in particular so as to meet the needs of data traffic transmitted over the telephone network.

In the method of the invention for the switching of data traffic in a data communication system, a data connection is set up between a terminal device and a remote access server on the basis of a selection made via the terminal device. In a preferred case, the data communication system is a telephone network comprising a telephone exchange and an access network together with an access node, which is connected to the telephone exchange via a V5 interface. Moreover, connected to the telephone exchange is a remote access server (RAS), which is used to adapt the connection between the telephone network and the data network. Correspondingly, in the system of the invention, a direct data connection is provided from the access node to the remote access server by using the local group switch of the access node.

According to the invention, the call setup message or messages sent by a terminal device is/are handled locally in the access node and a data link is connected by using the local group switch of the access node. The link is set up by connecting directly from the access node to the remote access server if the value of the SAPI (Service Access Point Identifier) comprised in the ISDN packet so indicates. This means that the connection is set up flexibly and without signalling between the telephone network and the access node.

As compared with prior art, the invention has the advantage that the method of the invention makes it possible to avoid collision and congestion situations caused by data traffic to a data network, such as the Internet.

Furthermore, the invention allows more effective utilization of the capacity of the remote access servers connected to the telephone network and of other equipment needed for setting up a connection to a data network. The invention makes the process of connecting a subscriber from the access network to a data network simpler both in respect of control of the telephone network and in respect of the physical arrangements regarding equipment.

A further advantage of the invention is that the access node need not necessarily be equipped with dial tone identification.

Performance-conscious users who set up data connections generally use an ISDN link. In such cases the solution of the invention will be particularly advantageous because of its ISDN compatibility.

In an embodiment of the method of the invention, a data connection setup request received from a terminal device, preferably an ISDN adapter connected to a computer, is processed or analyzed and, when it is discovered that a data connection from the terminal device via a remote access server to a data network is to be set up, then the access node group switch is instructed to connect the terminal device directly to the remote access server and further to the data network.

When a setup request is processed locally in the access node, the telephone exchange does not know that the subscriber is busy. In this case, a message indicating that the subscriber is busy must be sent from the access node to the telephone exchange. This message can also be given via a standard ALLOCATION_REJECT message in connection with the setup of a call addressed to the subscriber. Based on this, the telephone exchange can designate the subscriber as being busy and stop the setup of calls to the subscriber. On the other hand, this notification to inform the local exchange can also be effected using the manufacturer's own message transmission mechanisms not defined by the V5 recommendations.

In an embodiment of the invention, the call setup request issued by the terminal device is provided with an identifier which, when the request is processed in a service access point (SAP) connected to the access node, indicates that the call setup request relates to the setup of a data connection, enabling the connection to be linked appropriately. If no such identifier has been added to the call setup request or if the value of the identifier does not indicate a data connection, then the request will be signalled directly to the local exchange using normal V5 interface signalling.

In an embodiment of the invention, information indicating the instants of initiation and termination of a data connection is supplied to the telephone exchange for use in billing and other forms of data traffic monitoring. This is particularly important in cases where data connection setup is controlled locally in the access node, because, according to the standard, the access node is not connected to a billing system.

In the following, the invention is described by the aid of preferred embodiments by referring to the attached drawing, in which
Fig. 1 is a diagram representing a prior-art telephone network;
Fig. 2 is a diagram representing a third telephone network according to the invention;

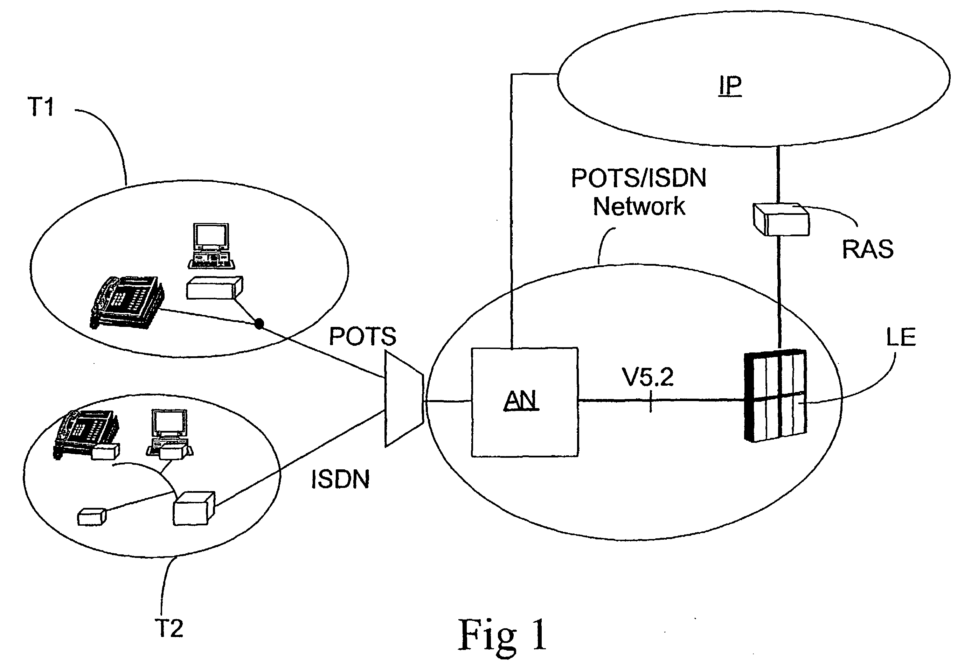

The telephone network presented in Fig. 1 comprises a local exchange LE and an access node AN connected to it via a V5.2 interface. Connected to the access node AN are two terminal devices T1 and T2. The first terminal device T1 is connected to a subscriber line (POTS; Plain Old Telephone System) supporting conventional telephony and it may consist of a computer and an ordinary modem connected to it. The second terminal device T2 is connected to a subscriber line supporting ISDN technology and it may also consist of a computer and an ISDN-TA adapter connected to it. Also, an ISDN router may be connected to the ISDN line to connect the local network or equivalent via the telephone network to another data network. In some applications, a data connection can be set up directly from the access node AN to a remote access server RAS.

In prior art, calls to be connected from the first and second terminal devices to a data network, such as the Internet IP, have been set up via the access node AN and the local exchange LE or, as mentioned above, directly from the access node AN to a remote access server RAS. The connection between the telephone network ISDN, POTS and the data network IP has been adapted by means of a remote access server RAS. In addition, the remote access server may have contained functions relating to billing and the identification of the subscriber requesting call setup. Data traffic, considerably heavier than telephone traffic, has caused congestion of the V5.2 interface between the access node AN and the local exchange LE.

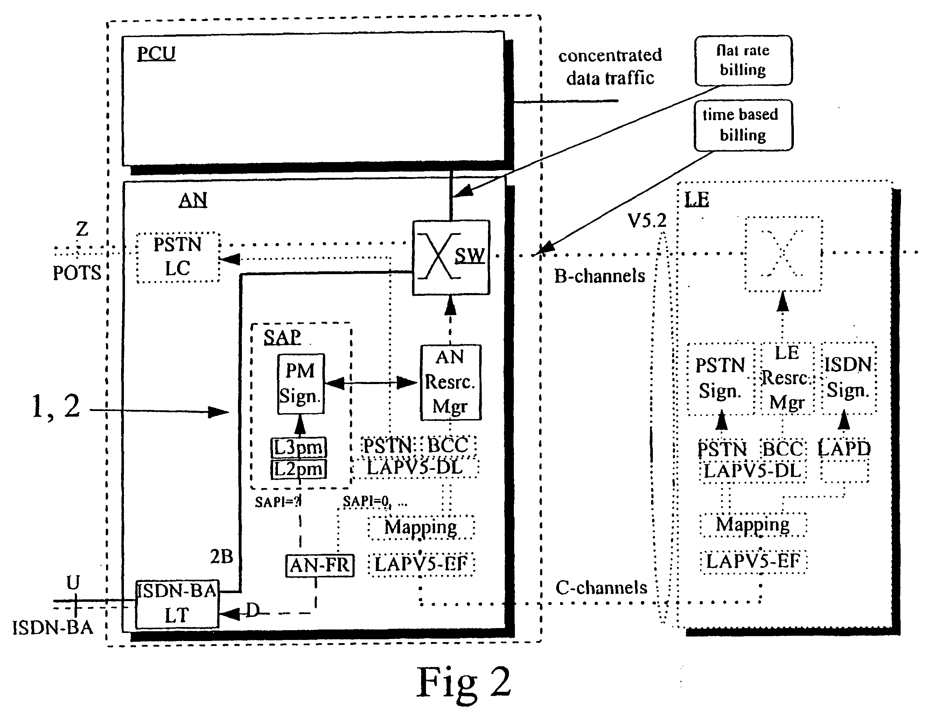

Referring to Fig. 2, comments are now presented concerning components in the access node AN and local exchange LE that are essential to the invention and are shown in the figures. The access node comprises a group switch SW and subscriber lines PSTN LC and ISDN-BA LT connected to it. There may be more subscriber lines connected to the access node than those presented in the figure. The group switch SW is controlled by a resource manager AN Resrc Mgr comprised in the access node. Connected to the resource manager are the protocol objects PSTN, BCC controlling the entire V5.2 interface. According to the standard, the ISDN signalling to be transmitted over the V5.2 interface is only packed in "envelopes" (envelope function) and transmitted in envelopes over the interface, to be unpacked in the local exchange; thus, the actual call control in ISDN connections is effected from the local exchange in accordance with the ISDN protocol. The V5.2 interface signalling is adapted by an adapting function, Mapping, to make it correspond to the other types of signalling (PSTN) used in the telephone network. Correspondingly, the local exchange contains the same functions and protocol objects as the access node. Let it be further noted that the analyzing tools 1 and the tools 2 used to control the group switch are formed by means of the objects and functions described above.

It is further pointed out that structural blocks presented in Fig. 2 that are not mentioned here are consistent with the normal V5 standard; as for these blocks, reference is made to said standard.

The diagram in Fig. 2 represents a solution according to the invention for avoiding congestion of the V5.2 interface. In this solution, the access node AN comprises a service access point SAP, where a call setup request transmitted via the access node is analyzed and, based on the analysis, traffic addressed to a data network is directed to the appropriate place. The remote access server RAS has been replaced with a packet concentrator unit PCU. In this example, the access node group switch SW is controlled locally by a service access point SAP provided in the access node. The setup of a data connection is described from the point of view of an ISDN connection.

In the example in Fig. 2, according to the invention, the service access point SAP provided in the access node AN plays a significant role in call setup. Moreover, the terminal device is also provided with the control functions required for packet-mode operation. The control functions for a data connection set up from an ISDN line are located in the access node AN, and the local exchange is not involved in the call setup procedure at all.

As defined in ETSI standard ETS 300 402-1, there may be several L3 (Layer 3) devices connected to the terminal device T1 and the exchange terminal ET. According to the standard, each frame to be transmitted comprises a data link connection identifier (DLCI) field, which in turn comprises two elements: a service access point identifier (SAPI) and a terminal endpoint identifier (TEI). The network identifies the desired service access point from the service access point identifier and the point of connection of the service access point from the terminal endpoint identifier; reference is made to recommendation Q.920, Fig. 5 and 8. In the present invention, a service identifier is used to distinguish a data connection from other connections by giving it a value which has not been defined for other functions. Therefore, the existing standard can be effectively utilised in the setup of a data connection between an access node and a remote access server.

When a terminal device T2 connected to an ISDN line (packet mode) starts a call setup procedure, the service identifier is given a predetermined value and the objects in the L3ₚₘ layer negotiate about allocating one or possibly two B-channels for the connection. If the allocation is successful, then the link will be routed directly to the packet concentrator unit PCU and further to the data network.

Although in this description the local exchange LE is not informed that the subscriber is busy, this information can be given with an ALLOCATION_REJECT message consistent with the V5 recommendations in conjunction with the setup of a call addressed to the subscriber. Via a Reject Cause information element, the local exchange can be informed that the subscriber is busy because of the data connection set up. On the other hand, the information about the subscriber being busy can also be sent to the local exchange using other links and mechanisms.

Let it be further noted that the system of the invention can be associated with an improved billing system. In this case, billing information is transmitted between the local exchange LE and the access node. The billing information is obtained from communication statistics stored by the function controlling data connection setup. Thus, even data calls connected directly from the access node AN to a data network can be included in the billing.

The invention is not restricted to the examples of its embodiments described above, but many variations are possible within the framework of the inventive idea defined by the claims.

## Claims

1. Method for the switching of data traffic in a data communication system comprising a telephone exchange (LE), an access node (AN) connected to the telephone exchange via a standard V5 interface, a remote access server (RAS) connected to the telephone network and to a data network to adapt a data connection between the telephone network and the data network, and a terminal device (T) connected to the access node, in which procedure a data connection is set up between the terminal device and the remote access server by connecting a data link directly from the access node to the remote access server (RAS), **characterised in that** the call setup request sent by the terminal device is handled locally in the access node and the data connection is set up by using the local group switch of the access node.

2. Method as defined in claim 1, **characterised in that** the call setup request is provided with an identifier on the basis of which the request is treated in a service access point (SAP) connected to the access node and which indicates that the request concerns the setup of a direct data connection between the access node (AN) and the remote access server (RAS).

3. Method as defined in claim 1 or 2, **characterised in that** a message indicating that the subscriber is busy is sent to the local exchange after the data connection between the remote access server (RAS) and the subscriber has been set up.

4. Method as defined in claim 1 or 2, **characterised in that** a message indicating that the subscriber is busy is sent to the local exchange when the local exchange gives notice of a call addressed to the subscriber.

5. Method as defined in any one of claims 1 - 4, **characterised in that** information giving the starting and terminating times of the data connection is sent to the local exchange for billing and monitoring of data traffic.

6. Data communication system for the switching of data traffic, comprising a telephone exchange (LE), an access node (AN) connected to the telephone exchange via a standard V5 interface, a remote access server (RAS) connected to the telephone network to adapt a data connection between the telephone network and a data network, and a terminal device (T) connected to the access node, in which system a data connection is set up between the terminal device and the remote access server using a direct data connection between the access node and the remote access server, **characterised in that** the access node comprises a service access point (SAP) for handling the call setup message sent by the terminal device locally in the access node and for connecting the data link by using the local group switch of the access node.

7. System as defined in claim 6, **characterised in that** the system comprises analyzing tools (1) for the analysis of a voice and/or data call setup request and tools (2) for controlling the group switch of the access node so as to connect a data call directly to the remote access server (RAS).

8. System as defined in claim 6 or 7, **characterized in that** the analyzing tools are disposed in the access node (AN).

## Patentansprüche

1. Verfahren zum Vermitteln von Datenverkehr in einem Daten-Kommunikationssystem mit einer Telefonvermittlung (**LE**), einem über eine Standard-V5-Schnittstelle mit der Telefonvermittlung verbundenen Zugangsknoten (**AN**), einem zur Anpassung einer Datenverbindung zwischen dem Telefonnetzwerk und einem Datennetzwerk mit dem Telefonnetzwerk und dem Datennetzwerk verbundenen Fern-Zugangsserver (**RAS**), und einer mit dem Zugangsknoten verbundenen Endgerätvorrichtung (**T**), wobei bei dem Verfahren eine Datenverbindung zwischen der Endgerätvorrichtung und dem Fern-Zugangsserver durch direktes Verbinden einer Datenverbindung von dem Zugangsknoten zum Fern-Zugangsserver (**RAS**) aufgebaut wird,
**dadurch gekennzeichnet, dass**
die durch die Endgerätvorrichtung gesendete Rufaufbauaufforderung lokal in dem Zugangsknoten gehandhabt wird und die Datenverbindung durch Verwenden des Lokal-Gruppenschalters des Zugangsknotens aufgebaut wird.

2. Verfahren gemäß Anspruch 1, **dadurch gekennzeichnet, dass** die Rufaufbauaufforderung mit einer Kennung versehen wird, auf deren Basis die Aufforderung in einem mit dem Zugangsknoten verbundenen Dienstzugangspunkt (**SAP**) behandelt wird, und die angibt, dass die Aufforderung den Aufbau einer Direkt-Datenverbindung zwischen dem Zugangsknoten (**AN**) und dem Fern-Zugangsserver (**RAS**) betrifft.

3. Verfahren gemäß Anspruch 1 oder 2, **dadurch gekennzeichnet, dass** eine Nachricht, die angibt, dass der Teilnehmer belegt ist, zur Ortsvermittlung gesendet wird, nachdem die Datenverbindung zwischen dem Fern-Zugangsserver (**RAS**) und dem Teilnehmer aufgebaut wurde.

4. Verfahren gemäß Anspruch 1 oder 2, **dadurch gekennzeichnet, dass** eine Nachricht, die angibt, dass der Teilnehmer belegt ist, zur Ortsvermittlung gesendet wird, wenn die Ortsvermittlung einen an den Teilnehmer gerichteten Ruf anzeigt.

5. Verfahren gemäß einem der Ansprüche 1 bis 4, **dadurch gekennzeichnet, dass** zur Gebührenerfassung und Überwachung von Datenverkehr die Start- und Endzeiten der Datenverbindung angebende Informationen zur Ortsvermittlung gesendet werden.

6. Daten-Kommunikationssystem zur Vermittlung von Datenverkehr, wobei das System eine Telefonvermittlung (**LE**), einen über eine Standard-V5-Schnittstelle mit der Telefonvermittlung verbundenen Zugangsknoten (**AN**), einen zur Anpassung einer Datenverbindung zwischen dem Telefonnetzwerk und einem Datennetzwerk mit dem Telefonnetzwerk verbundenen Fern-Zugangsserver (**RAS**), und eine mit dem Zugangsknoten verbundene Endgerätvorrichtung (**T**) aufweist, wobei in dem System eine Datenverbindung zwischen der Endgerätvorrichtung und dem Fern-Zugangsserver unter Verwendung einer Direkt-Datenverbindung zwischen dem Zugangsknoten und dem Fern-Zugangsserver aufgebaut wird,
**dadurch gekennzeichnet, dass**
der Zugangsknoten einen Dienstzugangspunkt (**SAP**) zum lokalen Handhaben der durch die Endgerätvorrichtung gesendeten Rufaufbaunachricht in dem Zugangsknoten und zum Verbinden der Datenverbindung durch Verwenden des Lokal-Gruppenschalters des Zugangsknotens aufweist.

7. System gemäß Anspruch 6, **dadurch gekennzeichnet, dass** das System eine Analyseeinrichtung (**1**) zur Analyse einer Sprach- und/oder Daten-Rufaufbau-Aufforderung und eine Einrichtung (**2**) zur Steuerung des Gruppenschalters des Zugangsknotens aufweist, um einen Datenruf direkt mit dem Fern-Zugangsserver (**RAS**) zu verbinden.

8. System gemäß Anspruch 6 oder 7, **dadurch gekennzeichnet, dass** die Analyseeinrichtung in dem Zugangsknoten (**AN**) angeordnet ist.

## Revendications

1. Procédé pour la commutation d'un trafic de données dans un système de communication de données comprenant un central téléphonique (LE), un noeud d'accès (AN) connecté au central téléphonique par l'intermédiaire d'une interface V5 standard, un serveur d'accès à distance (RAS) connecté au réseau téléphonique et à un réseau de données de façon à adapter une transmission de données entre le réseau téléphonique et le réseau de données, et un dispositif terminal (T) connecté au noeud d'accès, procédé dans lequel une transmission de données est établie entre le dispositif terminal et le serveur d'accès à distance en connectant une liaison de données directement du noeud d'accès au serveur d'accès à distance (RAS), **caractérisé en ce que** la requête d'établissement d'appel envoyée par le dispositif terminal est traitée au niveau local dans le noeud d'accès et la transmission de données est établie en utilisant la commutation de groupe locale du noeud d'accès.

2. Procédé selon la revendication 1, **caractérisé en ce que** la requête d'établissement d'appel est accompagnée d'un identificateur sur la base duquel la requête est traitée dans un point d'accès de service (SAP) connecté au noeud d'accès et qui indique que la requête concerne l'établissement d'une transmission de données directe entre le noeud d'accès (AN) et le serveur d'accès à distance (RAS).

3. Procédé selon la revendication 1 ou 2, **caractérisé en ce qu'**un message indiquant que l'abonné est occupé est envoyé au central local après l'établissement de la transmission de données entre le serveur d'accès à distance (RAS) et l'abonné.

4. Procédé selon la revendication 1 ou 2, **caractérisé en ce qu'**un message indiquant que l'abonné est occupé est envoyé au central local quand le central local signale un appel adressé à l'abonné.

5. Procédé selon l'une quelconque des revendications 1 à 4, **caractérisé en ce que** des informations précisant les moments de début et de fin de la transmission de données sont envoyées au central local à des fins de facturation et de surveillance du trafic de données.

6. Système de communication de données destiné à la commutation d'un trafic de données, comprenant un central téléphonique (LE), un noeud d'accès (AN) connecté au central téléphonique par l'intermédiaire d'une interface V5 standard, un serveur d'accès à distance (RAS) connecté au réseau téléphonique de façon à adapter une transmission de données entre le réseau téléphonique et un réseau de données, et un dispositif terminal (T) connecté au noeud d'accès, système dans lequel une transmission de données est établie entre le dispositif terminal et le serveur d'accès à distance en utilisant une transmission de données directe entre le noeud d'accès et le serveur d'accès à distance, **caractérisé en ce que** le noeud d'accès comprend un point d'accès de service (SAP) permettant de traiter le message d'établissement d'appel envoyé par le dispositif terminal au niveau local dans le noeud d'accès, et de connecter la liaison de données en utilisant la commutation de groupe locale du noeud d'accès.

7. Système selon la revendication 6, **caractérisé en ce que** le système comprend des instruments d'analyse (1) destinés à analyser une requête d'établissement d'appel en mode voix et/ou données, ainsi que des instruments (2) destinés à commander la commutation de groupe du noeud d'accès de façon à connecter un appel en mode données directement au serveur d'accès à distance (RAS).

8. Système selon la revendication 6 ou 7, **caractérisé en ce que** les instruments d'analyse sont installés dans le noeud d'accès (AN).
